(19) **Europäisches Patentamt / European Patent Office / Office européen des brevets**

(11) **EP 2 053 776 B1**

(12) **FASCICULE DE BREVET EUROPEEN**

(45) Date de publication et mention
de la délivrance du brevet:
**17.05.2017 Bulletin 2017/20**

(51) Int Cl.:
***H04L 5/02*** *(2006.01)*

(21) Numéro de dépôt: **08167007.7**

(22) Date de dépôt: **20.10.2008**

(54) **Méthode de recherche de bande libre pour terminal de télécommunication opportuniste**

Methode zur Suche nach freiem Frequenzbereich für opportunistisches Telekommunikationsendgerät

Method of finding a free band for an opportunistic telecommunication terminal

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.10.2007 FR 0758550**

(43) Date de publication de la demande:
**29.04.2009 Bulletin 2009/18**

(73) Titulaire: **Commissariat à l'Énergie Atomique et aux Énergies Alternatives 75015 Paris (FR)**

(72) Inventeur: **Jallon, Pierre 38100 Grenoble (FR)**

(74) Mandataire: **Augarde, Eric et al Brevalex 56 Boulevard de l'Embouchure, Bât. B B.P. 27519 31075 Toulouse Cedex 2 (FR)**

(56) Documents cités:
**EP-A- 1 750 467          US-A1- 2004 151 137 US-A1- 2006 067 354**

- **K J ET AL: "Wi-Fi Alliance The Wi-Fi Alliance Spectrum Sharing in the 5 GHz Band DFS Best Practices", , 10 October 2007 (2007-10-10), pages 1-23, XP055156831, http://dfpcorec-p.internal.epo.org/wf/web/ citenpl/citenpl.html?_url=http%3A//www.iee e802.org/18/Meeting_documents/2007_Nov/WF A -DFS-Best%2520Practices.pdf Retrieved from the Internet: URL:http://www.ieee802.org/18/Meeting_docu ments/2007_Nov/WFA-DFS-Best Practices.pdf [retrieved on 2014-12-04]**

**Description**

**DOMAINE TECHNIQUE**

La présente invention concerne les systèmes radio opportunistes, en particulier ceux destinés à émettre dans les bandes allouées au système de télévision à diffusion par voie terrestre DVB-T.

**ÉTAT DE LA TECHNIQUE ANTÉRIEURE**

L'encombrement de plus en plus important du spectre a conduit à envisager des systèmes de télécommunication capables de coexister avec les systèmes à bandes de fréquence déjà allouées, dits primaires. Deux stratégies de coexistence font actuellement l'objet d'importantes recherches. La première consiste à utiliser un niveau de signal très faible grâce à un très fort étalement de spectre, c'est la voie suivie par les systèmes ultra-large bande encore dénommés UWB (*Ultra Wide Band*). La seconde consiste à utiliser de manière opportuniste une partie du spectre ponctuellement ou temporairement inoccupée, c'est la voie dite de radio opportuniste (ou *Cognitive Radio*). On trouvera une description de la radio opportuniste dans la thèse fondatrice de J. Mitola intitulée « Cognitive radio : an integrated agent architecture for software defined radio », Royal Institute of Technology, Stockholm, PhD Dissertation, 8 Mai 2000.

Le principe de la radio opportuniste a été notamment retenu pour le développement des réseaux sans fil à longue portée encore dénommés WRAN (*Wireless Regional Area Network*). Ces réseaux font actuellement l'objet d'un processus de standardisation au sein du groupe de travail de IEEE 802.22. Plus précisément, cette norme en cours d'élaboration propose d'utiliser de manière opportuniste les bandes UHF et VHF vacantes pour réaliser une transmission sans fil point à point dans un réseau WRAN. Il est en particulier prévu que les bandes UHF allouées au système de télévision à diffusion par voie terrestre DVB-T (*Digital Video Broadcast-Terrestrial*) puissent être utilisées à cette fin. La norme DVB-T fait appel à une modulation OFDM (*Orthogonal Frequency Division Multiplexing*) pour transmettre des flux vidéo/audio compressés. On trouvera une introduction à la norme IEEE 802.22 dans l'article de C. Cordeiro et al. intitulé « IEEE 802.22 : an introduction to the first wireless standard base on cognitive radios », publié dans Journal of Communications, Vol. 1, N°1, Avril 2006, pp. 38-47.

Avant de pouvoir émettre dans une bande UHF donnée, il est nécessaire pour un émetteur du réseau WRAN de déterminer si cette bande est déjà occupée par le système primaire. Pour détecter si un signal DVB-T était présent dans une bande donnée, il a été proposé d'utiliser les propriétés d'autocorrélation du signal OFDM, dues à la présence du préfixe cyclique. On trouvera une description d'une telle méthode de détection dans l'article de Soo-Young Chang intitulé « IEEE P802.22 Wireless RANs- sensing scheme for DVB-T », publié en Novembre 2006. Un autre algorithme de détection de signaux OFDM a été décrit dans la demande française non publiée N° 07 55394 déposée le 31.05.2007 au nom de la demanderesse.Le brevet US2004/151137 divulgue un procédé de recherche d'une bande libre par un point d'accès WLAN qui classe les bandes de canaux radar en fonction de leur probabilité de ne pas être occupées, connaissant deux ensembles de bandes déjà occupées par un système d'émission radar ainsi qu'utilisées par d'autres points d'accès WLAN. Après s'être assuré que la bande n'est pas occupée par un système primaire, l'émetteur doit encore vérifier que la bande en question n'est pas déjà utilisée par un système secondaire, au moyen d'un algorithme de détection spécifique.

Dans le cas d'un réseau WRAN, les terminaux du système radio opportuniste utilisent eux-mêmes une modulation OFDM. La présence d'un système secondaire peut alors être détectée par la méthode de détection précitée.

Afin de trouver une bande libre, un terminal opportuniste doit tester séquentiellement les bandes de fréquences allouées au système primaire, le plus souvent selon un ordre croissant ou décroissant. Par exemple, dans le cas d'un réseau WRAN, les canaux UHF 21 à 69 devront être scannés successivement. Cette recherche peut s'avérer fastidieuse et ralentir considérablement l'accès au réseau.

Le but de la présente invention est donc de proposer une méthode de recherche de bande libre pour terminal de télécommunication opportuniste qui soit rapide et efficace.

**EXPOSÉ DE L'INVENTION**

La présente invention est définie par une méthode de recherche d'une bande libre par un terminal de télécommunication opportuniste opérant dans une zone couverte par un système de télécommunication primaire utilisant une pluralité de bandes de fréquence, selon laquelle ledit terminal classe lesdites bandes en fonction de leurs probabilités conditionnelles de ne pas être occupées par le système de télécommunication primaire, connaissant un premier ensemble de bandes déjà occupées par le système de télécommunication primaire ainsi qu'un second ensemble de bandes non occupées par ce dernier mais déjà utilisées par un autre terminal opportuniste, ledit terminal commençant sa recherche par la bande présentant la probabilité conditionnelle la plus élevée.

La méthode comprend avantageusement une pluralité d'itérations, lesdits premier et second ensembles étant mis à jour, à chaque itération, à partir d'un résultat de détection dans la bande présentant la probabilité conditionnelle la plus élevée lors de cette itération.

A chaque itération, le terminal mesure la puissance d'un signal du système de télécommunication primaire dans la bande présentant la probabilité conditionnelle la plus élevée.

Si ladite puissance est supérieure à une valeur de seuil prédéterminée, ledit premier ensemble est augmenté de ladite bande.

Si ladite puissance est inférieure à une valeur de seuil prédéterminée, le terminal peut tester si un autre terminal opportuniste utilise déjà ladite bande.

Si ladite bande est déjà utilisée par un autre terminal opportuniste pour émettre, le second ensemble est augmenté de ladite bande.

Si la bande n'est pas utilisée par un autre terminal opportuniste pour émettre, ladite bande est alors sélectionnée par ledit terminal opportuniste.

De préférence, ladite zone est partitionnée en zones élémentaires et, pour chaque bande donnée, ladite probabilité conditionnelle de ne pas être occupée par le système de télécommunication primaire, dite probabilité conditionnelle d'être disponible, est calculée à partir des probabilités respectives que les différentes bandes soient disponibles à l'intérieur des différentes zones élémentaires, et des surfaces respectives de ces zones dans lesquelles ladite bande donnée est disponible.

Dans la méthode exposée ci-dessus, le système de télécommunication primaire peut être par exemple un système de diffusion de signaux de télévision de type DVB-T.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 illustre une zone élémentaire couverte par un système de télécommunication primaire ;
La Fig. 2 illustre la méthode de recherche d'une bande libre par un terminal opportuniste, selon un mode de réalisation de l'invention.

## EXPOSÉ DÉTAILLÉ DE MODES DE RÉALISATION PARTICULIERS

Nous nous placerons à nouveau dans la situation d'un système de télécommunication primaire, par exemple le système DVB-T et d'un système de télécommunication secondaire, tel qu'un réseau 802.22.

On supposera dans la suite qu'un ensemble de bandes de fréquence $B=\{b_1,b_2,...,b_N\}$ est alloué au système de télécommunication primaire. Ce dernier est déployé sur une zone géographique donnée *A*, divisée en zones élémentaires disjointes $a_k$ telles que $A = \bigcup_k a_k$, autrement lesdites zones élémentaires définissent une partition de la zone *A*. Les émetteurs du système primaire sont répartis dans la zone *A* et utilisent les bandes de fréquence $b_n$, $n=1,...,N$ selon un plan d'allocation de fréquences prédéterminé.

A titre d'exemple non limitatif, le système de télécommunication primaire pourra être constitué par les émetteurs de la TNT (*Télévision Numérique Terrestre*), la zone *A* couvrira le territoire français et les zones élémentaires seront des carrés de 50 km de côté.

Un terminal opportuniste du système de télécommunication secondaire se trouvant dans la zone en question doit effectuer une recherche de bande libre dans l'ensemble *B* pour initier ou poursuivre une communication. On appellera par la suite bande disponible une bande allouée au système primaire dans laquelle le terminal n'a pas détecté de signal du système primaire. On entend par bande libre une bande disponible dans laquelle le terminal opportuniste n'a pas détecté de signal d'un autre terminal du système secondaire.

L'idée à la base de l'invention est de parcourir l'ensemble *B*, en commençant par les bandes ayant la plus forte probabilité de ne pas être utilisées par le système primaire, c'est-à-dire les bandes ayant la plus forte probabilité d'être disponibles.

Pour détecter si un signal du système primaire est présent dans la bande, on pourra fixer un seuil de détection. Par exemple, si le système primaire est celui de la TNT, on fixera un seuil de -116 dBm : la bande sera dite disponible si aucun signal DVB-T n'est présent avec un niveau de puissance supérieur à ce seuil.

Au cours de sa recherche, le terminal opportuniste sonde successivement des bandes, et obtient ainsi des informations sur leurs occupations respectives par le système primaire et, le cas échéant, par les terminaux du système secondaire. Connaissant le plan d'allocation de fréquences des émetteurs et leurs positions respectives, lesdites informations fournissent une indication, en termes de probabilité, quant à la situation du terminal dans telle ou telle zone élémentaire de *A*. Les probabilités de présence du terminal pour ces différentes zones élémentaires permettent à leur tour d'affiner les probabilités que ces bandes soient disponibles. Ainsi, d'une itération à la suivante, les probabilités d'occupation par le système primaire sont mises à jour et, à chaque itération, la bande présentant la probabilité d'occupation la plus faible est sélectionnée pour être testée par le terminal.

Nous adopterons dans la suite les conventions suivantes :

$B_{occ}$ est le sous-ensemble de *B* dans lequel le terminal a détecté la présence d'un signal du système primaire. Plus précisément, si $b_n \in B_{occ}$, le terminal est dans une zone où l'utilisation opportuniste de la bande $b_n$ perturberait la réception du système primaire.

$B_{opp}$ est le sous-ensemble de *B* dans lequel le terminal détecte une absence de signal du système primaire mais la présence d'un signal du système secondaire. Plus précisément, si $b_n \in B_{opp}$, cela implique que le terminal est dans une zone où une utilisation opportuniste de la bande $b_n$ ne perturbe pas la réception du système primaire. La bande en question ne peut toutefois être utilisée de manière opportuniste par le terminal du fait qu'elle est déjà utilisée par un autre terminal opportuniste du système secondaire.

$p(b_n|B_{occ},B_{opp})$ est la probabilité que la bande $b_n$ soit disponible, connaissant les ensembles de bandes occupées $B_{occ},B_{opp}$ définies précédemment.

Les zones élémentaires, notées $a_k$, formant une partition de *A*, on peut décomposer la probabilité conditionnelle $p(b_n|B_{occ},B_{opp})$ de la manière suivante :

$$p\left(b_n \middle| B_{occ}, B_{opp}\right) = \sum_{a_k \in A} p\left(b_n \middle| a_k, B_{occ}, B_{opp}\right) p\left(a_k \middle| B_{occ}, B_{opp}\right)$$

$$= \sum_{a_k \in A} p\left(b_n \middle| a_k\right) p\left(a_k \middle| B_{occ}, B_{opp}\right)$$

$$(1)$$

étant donné que $p(b_n|a_k,B_{occ},B_{opp})=p(b_n|a_k)$. En effet, dès lors que la zone $a_k$ est connue, la connaissance de $B_{occ},B_{opp}$ n'apporte pas d'information supplémentaire pour identifier les bandes disponibles dans cette zone. La seconde ligne de (1) signifie que la probabilité qu'une bande est disponible dépend des probabilités de présence du terminal dans les différentes zones $a_k$ compte tenu des résultats de détection $B_{occ},B_{opp}$, et pour chacune de ces zones, la probabilité que ladite bande soit disponible.

Plus précisément, la probabilité $p(b_n|a_k)$ est la probabilité que la bande $b_n$ soit disponible si le terminal se trouve dans la zone élémentaire $a_k$. Cette probabilité, notée ici $\beta_{n,k}$, vaut :

$$\beta_{n,k} = \frac{\sigma_k^n}{\sigma_k} \qquad (2)$$

où $\sigma_k$ est la surface de la zone élémentaire $a_k$ et $\sigma_k^n$ est la surface de $a_k$ dans laquelle la bande $b_n$ est disponible.

En pratique, on procède comme suit :

Pour chaque bande $b_i \in B$, connaissant les positions des émetteurs du système primaire émettant dans la bande $b_i$ ainsi que leurs puissances d'émission respectives, on détermine les zones $\Omega_i$ où cette bande $b_i$ n'est pas utilisable de manière opportuniste. Plus précisément, pour chaque émetteur $\varepsilon$ utilisant cette bande, on définit la zone $\Omega_i(\varepsilon)$ comme l'ensemble des points où le champ électrique est supérieur à un seuil de réception donné $T_1$. Pour la télévision numérique terrestre, on pourra prendre un seuil critique $T_1=25.4dB(\mu V/m)$ soit encore $T_1=-116dBm$. Pour déterminer la valeur du champ électrique en un point signaux DVB-T, on utilisera par exemple le modèle de propagation décrit par E. Sofer et al. dans le document IEEE 802.22 intitulé « WRAN Channel modeling », r6, daté du 30.08.2005.

Pour une zone élémentaire $a_k$ et une $b_n$ bande données, on recherche les points appartenant à $a_k$ pour lesquels la bande $b_n$ est disponible. Plus précisément, on discrétise $a_k$ au moyen de carrés de faible taille et on considère la grille de points formée par les centres de ces carrés. Pour chaque point *G* de cette grille, on teste s'il est dans l'une des zones $\Omega_n$. Si c'est le cas, la bande $b_n$ n'est alors pas disponible dans le carré élémentaire de centre *G*.

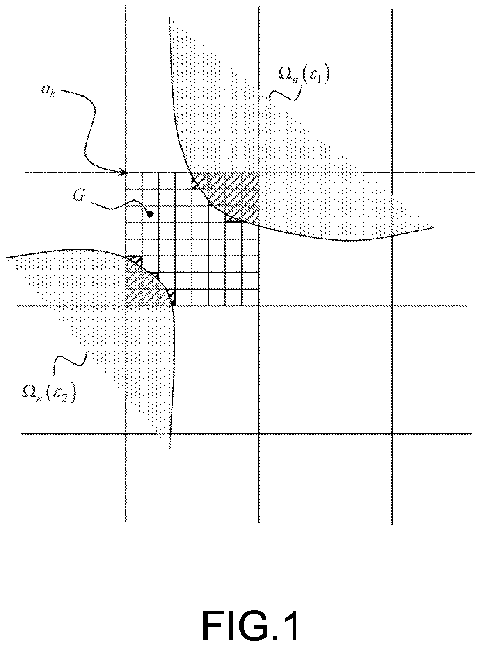

La Fig. 1 représente une zone élémentaire $a_k$ et les zones $\Omega_n$ relatives à deux émetteurs $\varepsilon_1$ et $\varepsilon_2$, ici supposés seuls à occuper la bande $b_n$ dans la zone $a_k$. Les carrés dans lesquels la bande $b_n$ n'est pas disponible ont été représentés par un motif hachuré.

La surface $\sigma_k^n$ n'est autre que la somme des surfaces des carrés de la zone élémentaire $a_k$ pour lesquels la bande $b_n$ est disponible, c'est-à-dire les carrés laissés en blanc.

Il est important de noter que le calcul des probabilités conditionnelles $p(b_n|a_k)$ peut être réalisé une fois pour toutes, dès lors que l'on connaît les positions et les puissances respectives des émetteurs du système primaire.

La seconde probabilité conditionnelle intervenant dans l'expression (1) est la probabilité que le terminal soit dans la zone $a_k$, sachant que :

(a) le terminal a détecté un signal du système primaire dans les bandes $b_n \in B_{occ}$, et
(b) il a vérifié l'absence d'un signal du système primaire dans les bandes $b_n \in B_{opp}$ et détecté la présence d'un signal du système secondaire.

Cette probabilité peut s'exprimer, au moyen du théorème de Bayes :

$$p\left(a_k\middle|B_{occ},B_{opp}\right) = \frac{p\left(a_k\right)p\left(B_{occ},B_{opp}\middle|a_k\right)}{p\left(B_{occ},B_{opp}\right)} \qquad (3)$$

En supposant que les événements $\{b_i \in B_{opp}|a_k\}$ et $\{b_j \in B_{opp}\}$ sont indépendants si $i \neq j$, l'expression $p(B_{occ},B_{opp}|a_k)$ peut être factorisée sous la forme :

$$p\left(B_{occ},B_{opp}\middle|a_k\right) = \prod_{b_i \in B_{occ}} p\left(b_i\middle|a_k\right) \prod_{b_j \in B_{opp}} p\left(b_j\middle|a_k\right) \qquad (4)$$

La probabilité $p(b_i|a_k)$ pour $b_i \in B_{occ}$ est la probabilité que la bande $b_i$ soit utilisée par le système primaire sachant que le terminal est dans la zone $a_k$, autrement dit la probabilité que le terminal ne puisse pas utiliser la bande $b_i$ à cause de son occupation par le système primaire, soit $p(b_i|a_k)=1-\beta_{i,k}$.

De manière similaire, la probabilité $p(b_j|a_k)$ pour $b_j \in B_{opp}$ est la probabilité que la bande $b_j$ soit disponible dans la zone $a_k$. Elle est donc égale à la probabilité $\beta_{j,k}$.

Il en résulte que la probabilité conditionnelle $p(a_k|B_{occ},B_{opp})$ peut s'exprimer comme suit:

$$p\left(a_k\middle|B_{occ},B_{opp}\right) = \frac{1}{p\left(B_{occ},B_{opp}\right)}\frac{\sigma_k}{\sigma_A}\prod_{b_i \in B_{occ}}(1-\beta_{i,k})\prod_{b_j \in B_{opp}}\beta_{j,k}$$

$$(5)$$

où $\sigma_A = \sum_{i=1}^{K}\sigma_i$ est la surface totale, $K$ étant le nombre de zones élémentaires.

La surface $\sigma_A$ et la probabilité $p(B_{occ},B_{opp})$ dans (5) sont des facteurs communs qui ne dépendent pas de $a_k$. En définitive, si l'on normalise la probabilité $p(a_k|B_{occ},B_{opp})$ par la probabilité que le terminal se trouve dans une zone quelconque, sachant $B_{occ},B_{opp}$ :

$$p\left(a_k\middle|B_{occ},B_{opp}\right) = \frac{\sigma_k \prod_{b_i \in B_{occ}}(1-\beta_{i,k})\prod_{b_j \in B_{opp}}\beta_{j,k}}{\sum_{\ell}p\left(a_\ell\middle|B_{occ},B_{opp}\right)} \qquad (6)$$

et donc, en remplaçant les expressions (2) et (6) dans (1) :

$$p\left(b_n \middle| B_{occ}, B_{opp}\right) = \sum_k \frac{\sigma_k^n \prod_{b_i \in B_{occ}} (1 - \beta_{i,k}) \prod_{b_j \in B_{opp}} \beta_{j,k}}{\sum_\ell p\left(a_\ell \middle| B_{occ}, B_{opp}\right)} \qquad (7)$$

Les termes $\sigma_k^i$, $\beta_{i,k}$ pour $i=1,...,N$ et $k=1,...,K$ peuvent être déterminés une fois pour toutes puisqu'ils ne dépendent que du déploiement du réseau primaire dans la zone $A$.

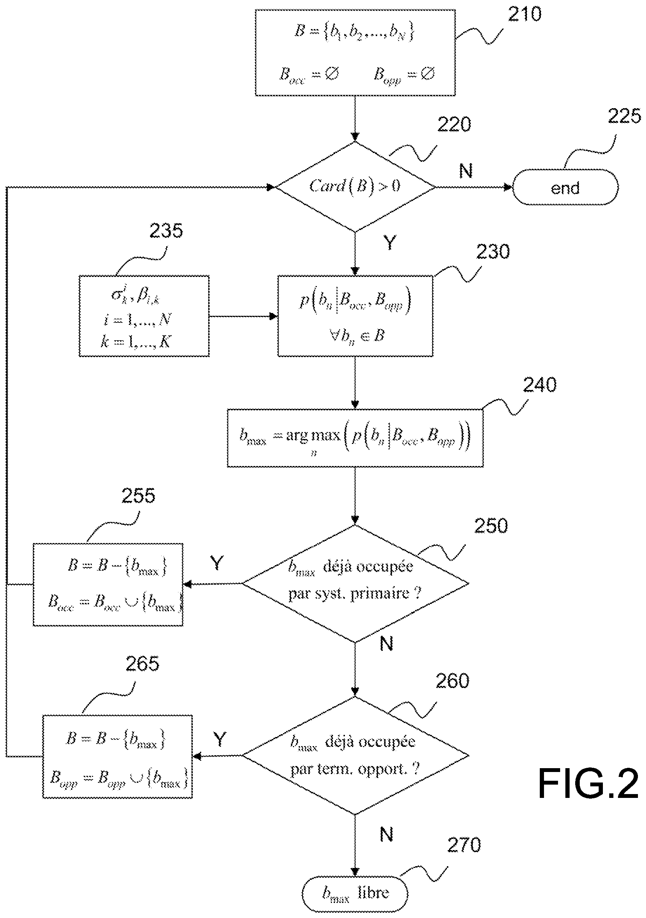

Un terminal opportuniste situé dans la zone $A$ utilise les probabilités conditionnelles $p(b_n|B_{occ},B_{opp})$ des différentes bandes de $B$ pour effectuer la recherche de bande libre, comme illustré en Fig. 2.

La méthode de recherche commence par une étape d'initialisation, 210 :

$B=\{b_1,b_2,...,b_N\}$ est l'ensemble des bandes que peut utiliser le système primaire ;
$B_{occ}$ et $B_{opp}$ sont initialisés à l'ensemble vide.

A l'étape 220, on teste si $Card(B)>0$. Dans l'affirmative, on passe à l'étape de calcul 230. Dans la négative, on termine en 225 par un constat d'échec : le terminal opportuniste ne peut utiliser aucune des bandes de $B$ pour transmettre.

A l'étape 230, le terminal calcule les probabilités $p(b_n|B_{occ},B_{opp})$ à partir des ensembles courants $B_{occ},B_{opp}$ et des valeurs $\sigma_k^i$, $\beta_{i,k}$ pour $i=1,...,N$ et $k=1,...,K$ stockées dans une mémoire 235.

A l'étape 240, les probabilités $p(b_n|B_{occ},B_{opp})$ sont triées et le terminal détermine :

$$b_{\max} = \arg\max_n \left( p\left(b_n \middle| B_{occ}, B_{opp}\right) \right) \qquad (8)$$

A l'étape 250, le terminal détecte si la bande $b_{\max}$ est occupée par le système primaire. Plus précisément :

- si $p(b_{\max}|B_{occ},B_{opp})=1$, le terminal en conclut que la bande $b_{\max}$ n'est pas occupée par le système primaire. Ceci correspond à une situation où les zones de couverture des émetteurs utilisant $b_{\max}$ sont suffisamment éloignées du lieu où se trouve le terminal ;
- sinon, le terminal détecte si le niveau de signal primaire reçu dans cette bande est inférieur à une valeur de seuil prédéterminée (par exemple, si le système primaire est celui de la TNT et les signaux émis sont des signaux DVB-T, on pourra prendre une valeur de seuil de -116 dBm). Dans la négative, on considère que la bande $b_{\max}$ est occupée par le système primaire et l'on passe à l'étape de mise à jour 255. En revanche, si la bande $b_{\max}$ n'est pas occupée par le système primaire, c'est-à-dire si $b_{\max}$ est disponible, on passe à l'étape de détection 260.

A l'étape 260, on teste si la bande $b_{\max}$ est déjà utilisée par un autre terminal opportuniste. Si ce n'est pas le cas, le terminal a trouvé une bande libre et l'algorithme s'arrête en 270. A l'inverse, on passe à l'étape de mise à jour 265.

A l'étape 255, on met à jour l'ensemble $B$ par $B=B-\{b_{\max}\}$ et l'on procède à la mise à jour de $B_{occ}$, soit $B_{occ}=B_{occ}\cup\{b_{\max}\}$ ;

A l'étape 265, on met à jour l'ensemble $B$ par $B=B-\{b_{\max}\}$ et l'on procède à la mise à jour de $B_{opp}$, soit $B_{opp}=B_{opp}\cup\{b_{\max}\}$.

Dans les deux cas, on retourne à l'étape de test 220.

Le processus de recherche de bande libre peut être répété périodiquement, notamment si le terminal opportuniste est mobile.

**Revendications**

1. Méthode de recherche d'une bande libre par un terminal de télécommunication opportuniste opérant dans une zone couverte par un système de télécommunication primaire utilisant une pluralité de bandes de fréquence ($B$), **caractérisée en ce que** ledit terminal classe lesdites bandes en fonction de leurs probabilités conditionnelles de ne pas être occupées par le système de télécommunication primaire ($p(b_{\max}|B_{occ},B_{opp})$), connaissant un premier ensemble de bandes déjà occupées par le système de télécommunication primaire ($B_{occ}$) ainsi qu'un second ensemble de bandes non occupées par ce dernier mais déjà utilisées par un autre terminal opportuniste ($B_{opp}$), ledit terminal commençant sa recherche par la bande présentant la probabilité conditionnelle la plus élevée ($b_{\max}$).

**2.** Méthode de recherche de bande libre selon la revendication 1, **caractérisée en ce qu'**elle comprend une pluralité d'itérations, lesdits premier et second ensembles étant mis à jour, à chaque itération, à partir d'un résultat de détection dans la bande présentant la probabilité conditionnelle la plus élevée lors de cette itération.

**3.** Méthode de recherche de bande libre selon la revendication 2, **caractérisée en ce que** le terminal mesure la puissance d'un signal du système de télécommunication primaire dans la bande présentant la probabilité conditionnelle la plus élevée à chaque itération.

**4.** Méthode de recherche de bande libre selon la revendication 3, **caractérisée en ce que**, si ladite puissance est supérieure à une valeur de seuil prédéterminée, ledit premier ensemble est augmenté de ladite bande.

**5.** Méthode de recherche de bande libre selon la revendication 3, **caractérisée en ce que**, si ladite puissance est inférieure à une valeur de seuil prédéterminée, le terminal teste si un autre terminal opportuniste utilise déjà ladite bande.

**6.** Méthode de recherche de bande libre selon la revendication 5, **caractérisée en ce que**, si ladite bande est déjà utilisée par un autre terminal opportuniste pour émettre, le second ensemble est augmenté de ladite bande.

**7.** Méthode de recherche de bande libre selon la revendication 5, **caractérisée en ce que**, si la bande n'est pas utilisée par un autre terminal opportuniste pour émettre, ladite bande est alors sélectionnée par ledit terminal opportuniste.

**8.** Méthode de recherche de bande libre selon l'une des revendications précédentes, **caractérisée en ce que** ladite zone est partitionnée en zones élémentaires ($a_k$) et que, pour chaque bande donnée ($b_n$), ladite probabilité conditionnelle de ne pas être occupée par le système de télécommunication primaire, dite probabilité conditionnelle d'être disponible (($p(b_n|B_{occ},B_{opp})$)), est calculée à partir des probabilités respectives ($\beta_{i,k}$) que les différentes bandes soient disponibles à l'intérieur des différentes zones élémentaires et des surfaces respectives ($\sigma_n^k$) de ces zones dans lesquelles ladite bande donnée est disponible.

**9.** Méthode de recherche de bande libre selon l'une des revendications précédentes, **caractérisée en ce que** le système de télécommunication primaire est un système de diffusion de signaux de télévision de type DVB-T.

**Patentansprüche**

**1.** Verfahren zur Suche nach einem freien Band durch ein opportunistisches Telekommunikationsterminal, das in einer Zone operiert, die durch ein Primärtelekommunikationssystem abgedeckt ist, welches eine Mehrzahl von Frequenzbändern ($B$) verwendet, **dadurch gekennzeichnet, dass** das Terminal die Bänder als Funktion ihrer bedingten Wahrscheinlichkeiten dafür klassifiziert, nicht durch das Primärtelekommunikationssystem besetzt zu sein ($p(b_{max}|B_{occ},B_{opp})$), wobei es eine erste Gruppe von Bändern kennt, die bereits durch das Primärtelekommunikationssystem besetzt sind ($B_{occ}$) sowie eine zweite Gruppe von Bändern, die durch dieses Letztgenannte nicht besetzt sind, jedoch bereits durch ein anderes opportunistisches Terminal verwendet werden ($B_{opp}$), wobei das Terminal seine Suche mit demjenigen Band beginnt, das die höchste bedingte Wahrscheinlichkeit ($b_{max}$) aufweist.

**2.** Verfahren zur Suche nach einem freien Band nach Anspruch 1, **dadurch gekennzeichnet, dass** es eine Mehrzahl von Iterationen umfasst, wobei die erste und die zweite Gruppe bei jeder Iteration aktualisiert werden ausgehend von einem Erfassungsergebnis in demjenigen Band, das während dieser Iteration die höchste bedingte Wahrscheinlichkeit aufweist.

**3.** Verfahren zur Suche nach einem freien Band nach Anspruch 2, **dadurch gekennzeichnet, dass** das Terminal bei jeder Iteration die Stärke eines Signals des Primärtelekommunikationssystems in demjenigen Band misst, das die höchste bedingte Wahrscheinlichkeit aufweist.

**4.** Verfahren zur Suche nach einem freien Band nach Anspruch 3, **dadurch gekennzeichnet, dass** dann, wenn die Stärke größer als ein vorbestimmter Schwellenwert ist, die erste Gruppe um das Band vergrößert wird.

**5.** Verfahren zur Suche nach einem freien Band nach Anspruch 3, **dadurch gekennzeichnet, dass** dann, wenn die Stärke kleiner als ein vorbestimmter Schwellenwert ist, das Terminal testet, ob ein anderes opportunistisches Terminal das Band bereits verwendet.

6. Verfahren zur Suche nach einem freien Band nach Anspruch 5, **dadurch gekennzeichnet, dass** dann, wenn das Band bereits von einem anderen opportunistischen Terminal zum Senden verwendet wird, die zweite Gruppe um das Band vergrößert wird.

7. Verfahren zur Suche nach einem freien Band nach Anspruch 5, **dadurch gekennzeichnet, dass** dann, wenn das Band nicht durch ein anderes opportunistisches Terminal zum Senden verwendet wird, das Band dann durch das opportunistische Terminal ausgewählt wird.

8. Verfahren zur Suche nach einem freien Band nach einem der vorhergehenden Ansprüche, **dadurch gekennzeichnet, dass** die Zone in Elementarzonen ($a_k$) unterteilt ist, und dass für jedes gegebene Band ($b_n$) die bedingte Wahrscheinlichkeit dafür, dass es nicht durch das Primärtelekommunikationssystem besetzt ist, genannt bedingte Wahrscheinlichkeit dafür, verfügbar zu sein (($p\,(b_n \mid B_{occ},\, B_{opp})$)) berechnet wird ausgehend von den jeweiligen Wahrscheinlichkeiten ($\beta_{i,k}$) dafür, dass die verschiedenen Bänder innerhalb der verschiedenen Elementarzonen und der jeweiligen Oberflächen ($\sigma_n^k$) dieser Zonen verfügbar sind, in denen das gegebene Band verfügbar ist.

9. Verfahren zur Suche nach einem freien Band nach einem der vorhergehenden Ansprüche, **dadurch gekennzeichnet, dass** das Primärtelekommunikationssystem ein System zur Verbreitung von Fernsehsignalen vom Typ DVB-T ist.

**Claims**

1. Method of searching for free band using a cognitive telecommunication terminal operating in a zone covered by a primary telecommunication system using a plurality of frequency bands ($B$), **characterised in that** said terminal classifies said bands as a function of their conditional probabilities of not being occupied by the primary telecommunication system ($p(b_{max}|B_{occ,Bopp})$), knowing a first set of bands already occupied by the primary telecommunication system ($B_{occ}$) and a second set of bands not occupied by this primary telecommunication system but already used by another cognitive terminal ($B_{opp}$), said terminal beginning its search by the band with the highest conditional probability ($b_{max}$).

2. Method of searching for free band according to claim 1, **characterised in that** it uses a plurality of iterations, said first and second sets being updated during each iteration using the result of detection in the band with the highest conditional probability during this iteration.

3. Method of searching for free band according to claim 2, **characterised in that** during each iteration, the terminal measures the power of a signal from the primary telecommunication system in the band with the highest conditional probability.

4. Method of searching for free band according to claim 3, **characterised in that**, if said power is greater than a predetermined threshold value, said first set is increased by said band.

5. Method of searching for free band according to claim 3, **characterised in that**, if said power is less than a predetermined threshold value, the terminal tests if another cognitive terminal already uses said band.

6. Method of searching for free band according to claim 5, **characterised in that**, if said band is already used by another cognitive terminal to emit, the second set is increased by said band.

7. Method of searching for free band according to claim 5, **characterised in that**, if the band is not used by another cognitive terminal to emit, said band is then selected by said cognitive terminal.

8. Method of searching for free band according to one of the previous claims, **characterised in that** said zone is partitioned into elementary zones ($a_k$) and, for each given band ($b_n$), said conditional probability of not being occupied by the primary telecommunication system, called the conditional probability of being available (($p(b_n|B_{occ},B_{opp})$)), is

calculated from the corresponding probabilities ($\beta_{i,k}$) that the different bands are available inside the different elementary zones and the corresponding areas ( $\sigma_n^k$ ) of these zones in which said given band is available.

9. Method of searching for free band according to one of the previous claims, **characterised in that** the primary telecommunication system is a system for broadcasting DVB-T type television signals.

FIG.1

**FIG.2**

**EP 2 053 776 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004151137 A

**Littérature non-brevet citée dans la description**

- **J. MITOLA.** Cognitive radio : an integrated agent architecture for software defined radio. Royal Institute of Technology, 08 Mai 2000
- **C. CORDEIRO et al.** IEEE 802.22 : an introduction to the first wireless standard base on cognitive radios. *Journal of Communications,* Avril 2006, vol. 1 (1), 38-47
- **SOO-YOUNG CHANG.** *IEEE P802.22 Wireless RANs- sensing scheme for DVB-T,* Novembre 2006
- **E. SOFER et al.** WRAN Channel modeling. *IEEE 802.22,* 30 Août 2005

12